# EUROPÄISCHE PATENTSCHRIFT

(11) **EP 2 098 361 B1**
(45) Veröffentlichungstag und Bekanntmachung des Hinweises auf die Patenterteilung: **12.08.2015**
(21) Anmeldenummer: 09100102.4
(22) Anmeldetag: 06.02.2009
(51) Int. Cl.: B31B 1/02, B65G 21/20, B65G 21/10

(54) **Vorrichtung zum Aufnehmen von Führungselementen und Werkzeugen einer Faltschachtelklebemaschine**
Device for holding guide elements and tools of a folding box adhesive machine
Dispositif d'enregistrement d'éléments de guidage et outils d'une machine de collage de boîtes pliantes

(30) Priorität: 05.03.2008 DE 102008012776
(43) Veröffentlichungstag der Anmeldung: 09.09.2009
(73) Patentinhaber: Masterwork Machinery Co., Ltd., Tianjin, 300400 (CN)
(72) Erfinder: Diehr, Wolfgang, 41515 Grevenbroich (DE); Stumberger, Maik, 40721 Hilden (DE)
(74) Vertreter: Strehl Schübel-Hopf & Partner

(56) Entgegenhaltungen:
- WO-A1-99/62700
- BE-A- 487 280
- DE-U1-202008 003 135

## Beschreibung

Die Erfindung betrifft eine Vorrichtung zum Aufnehmen von Führungselementen und / oder Werkzeugen einer Faltschachtelklebemaschine gemäß dem Oberbegriff von Anspruch 1.

Faltschachtelklebemaschinen zur Herstellung von Faltschachteln aus Zuschnitten weisen bekannter Weise zumindest die folgenden Bearbeitungsstationen auf:
- Einen Einleger, der die zu verarbeitenden Zuschnitte mit hoher Geschwindigkeit aus einem Stapel nacheinander abzieht und einzeln der nachfolgenden Bearbeitungsstation zuführt,
- eine Faltstation, in der die mit einem Klebestreifen versehenen Zuschnittteile zur Herstellung einer Klebeverbindung um 180° umgelegt, also gefaltet werden,
- eine Überleitstation, die die gefalteten, mit noch nicht abgebundenen Klebenähten versehenen Zuschnitte in allen Teilen exakt ausgerichtet der nachfolgenden Sammel- und Presseinrichtung zuführt werden, und
- eine Sammel- und Presseinrichtung, in der zunächst ein Schuppenstrom aus gefalteten Zuschnitten gebildet wird, der anschließend zwischen Pressbändem für einige Zeit unter Druck gehalten wird, damit die Klebenähte abbinden.

Je nach herzustellenden Schachteltyp kann die Maschine weitere Bearbeitungsstationen enthalten; beispielsweise ein oder mehrere Vorbrecher, in denen Faltlappen vor- und zurückgefaltet werden, damit die entsprechenden Längsrilllinien durch Knicken um 180° weich und geschmeidig gemacht werden, und weitere Faltstationen, um zusätzliche Faltungen durchzuführen. Zu Beginn einer Faltstation ist üblicherweise ein Auftragwerk für Klebstoff angeordnet, das auf die zu verklebenden Faltlappen einen Klebstoffstreifen aufträgt.

Die Zuschnitte werden durch die einzelne Stationen durch angetriebene Fördermittel gefördert. Als angetriebene Fördermittel werden zwei oder drei Förderriemenpaare verwendet, die mit Querabstand so angeordnet sind, dass sie die Zuschnitte von oben und unten haltend führen.

Je nach Breite eines Faltschachtelzuschnittes, der durch die Faltschachtelklebemaschine transportiert wird, kann es notwendig sein, dass der Zuschnitt auch in der Mitte transportiert wird. In diesem Fall ist es möglich, in die Faltstation einen Mitteltransport einzufügen bzw. der Transportebene der Faltschachtelzuschnitte zuzustellen. Dies geschieht nach dem Stand der Technik, vgl., z.B. WO 99/62700 dadurch, dass das obere Transportband, das in einer sogenannten Rollschiene geführt ist, der Transportebene von oben über Führungen zugestellt wird. Das untere mittlere Transportband, das in einer sogenannten Rollenwange geführt ist, muss separat in die Faltschachtelklebemaschine eingebaut werden oder kann auch mittels eines Hochklappens in die Transportebene gestellt werden. In dem Fall, in dem die zu faltenden Zuschnitte sehr schmal sind und die beiden äußeren Transportriemen der Faltschachtelklebemaschine sehr eng zusammengeführt werden, müssen unteres mittleres und oberes mittleres Transportband wieder aus der Maschine entfernt werden.

Zum Einbringen und Entfernen von Führungselementen und / oder Werkzeugen ist es bekannt, die Führungselemente und / oder Werkzeuge an einem Rahmen zu befestigen. Der Rahmen kann dann entweder entlang einer vertikalen Achse motorisch in eine höhere Position verschoben werden oder durch Verschwenken um 90 ° von seiner vertikalen Wirkposition in eine horizontale Parkposition verbracht werden. Nachteilig an diesen bekannten Lösungen ist im ersten Fall die aufwendige Konstruktion und im zweiten Fall die geringe Ergonomie und bestehende Gefahren bei der Bedienung des Rahmens.

Aufgabe der vorliegenden Erfindung ist es deshalb, eine Aufnahmevorrichtung einer Faltschachtelklebemaschine zum Aufnehmen von Führungselementen und / oder Werkzeugen zu schaffen, welche durch einen einfachen Aufbau und ein hohes Maß an Ergonomie und Bedienungssicherheit gekennzeichnet ist.

Gelöst wird diese Aufgabe durch eine erfindungsgemäße Aufnahmevorrichtung einer Faltschachtelklebemaschine gemäß dem kennzeichnenden Teil von Anspruch 1.

Die Aufnahmevorrichtung dient dem Aufnehmen von Führungselemente, wie insbesondere von Rollschienen und / oder von Werkzeugen, wie z. B. Falteinrichtungen oder anderen Zusatzeinrichtungen. Die Aufnahmevorrichtung lässt sich an verschiedenen Postionen innerhalb der Faltschachtelklebemaschine einsetzen und entsprechend den dort vorliegenden Erfordernissen wird die Aufnahmevorrichtung mit Führungselementen und / oder Werkzeugen bestückt. Die Führungselemente und / oder Werkzeuge sind an einem Rahmen befestigt, welcher Teil der Aufnahmevorrichtung ist. Wenn sich der Rahmen in seiner horizontalen Lage befindet, der sogenannten Wirkposition, dann befinden sich die an dem Rahmen angebrachten Führungselemente und / oder Werkzeuge in ihrer Wirkposition in oder direkt oberhalb der Faltschachteltransportebene. Der Rahmen kann um eine Schwenkachse, welche parallel zur Faltschachteltransportrichtung ausgerichtet ist, von seiner horizontalen Lage in eine Schräglage verbracht werden. In der Schräglage befinden sich die Führungselemente und / oder Werkzeuge außer Eingriff in ihrer sogenannten Parkposition. Die Lage des Rahmens in seiner Parkposition wird dabei durch eine Anschlageinrichtung so festgelegt, dass der Rahmen bei der Schwenkbewegung von seiner Wirkposition in seine Parkposition einen Winkel von weniger als 90 ° durchschreitet.

Vorteilhafterweise besitzt die Anschlageinrichtung ein verstellbares Anschlagelement, wie beispielsweise eine Stellschraube. Durch die Verstellbarkeit des Anschlagelements lässt sich die Höhe des Rahmens in seiner Parkposition festlegen und der Maschinenbediener kann diese so einstellen, dass er den Rahmen der Aufnahmevorrichtung problemlos und ergonomisch mit einer Hand ergreifen kann.

In einer vorteilhaften Weiterbildung der Erfindung sind die Führungselemente und / oder Werkzeuge verschieblich an dem Rahmen befestigt.

In einer besonders vorteilhaften Ausführungsform der Aufnahmevorrichtung besitzt diese mindestens eine Gasdruckfeder, welche den Rahmen von seiner horizontalen Lage in seine Schräglage bewegt und den Rahmen in seiner Schräglage hält. Besonders vorteilhaft ist der Einsatz von zwei Gasdruckfedern, welche so an dem Rahmen befestigt sind, dass dieser bei der Verschwenkbewegung keine Verdrehung erfährt.

In einer besonders vorteilhaften Weiterbildung der Aufnahmevorrichtung ist an der der Schwenkachse gegenüber liegenden Seite des Rahmens eine Arretiereinrichtung zum temporären Befestigen des Rahmens am Maschinengestell der Faltschachtelklebemaschine angebracht. In einer vorteilhaften Ausführungsform umfasst die Arretiereinrichtung mindestens ein Führungselement und mindestens ein Einrast- und Zentrierelement. Zusätzlich kann die Arretiereinrichtung weiter ein Arrtetierelement oder mehrere Arretierelemente umfassen. In einer vorteilhaften Ausgestaltung handelt es sich bei dem Führungselement um eine Ausnehmung oder Nut, welche in ein am Maschinengestell angebrachtes Gegenelement eingreift. Bei dem Einrast- und Zentrierelement handelt es sich um eine Bohrung, welche den Kopf einer am Maschinengestell angebrachten Schraube oder einen mit dem Maschinengestell verbundenen Bolzen aufnimmt. Bei dem Arretierelement kann es sich um eine Sicherungsschraube, einen Sterngriff, einen Kreuzgriff und / oder einen Klemmhebel handeln. Hier nicht genannte ähnliche und gleichwirkende Führungselemente, Einrast- und Zentrierelemente und Arrtierelemente können ebenfalls zum Einsatz kommen.

In einer vorteilhaften Weiterbildung der Aufnahmevorrichtung weist diese eine Bremseinrichtung auf, welche die durch die mindestens eine Gasdruckfeder hervorgerufene Schwenkbewegung abbremst. Die Bremseinrichtung kann dabei vorteilhafterweise zwischen Rahmen und Maschinengestell der Faltschachtelklebemaschine angebracht sein. Bei der Bremseinrichtung kann es sich beispielsweise um einen Ölbremszylinder oder einen steuerbaren Pneumatikzylinder handeln. Der Einsatz eines steuerbaren Pneumatikzylinders ist besonders vorteilhaft, da dieser so angesteuert werden kann, dass er nicht nur ein Abbremsen der durch die Gasdruckfedern hervorgerufenen Schwenkbewegung bewirkt, sondern auch das Herunterschwenken des Rahmens von seiner Park- in seine Wirkposition unterstützen kann.

Um den Rahmen einer Aufnahmevorrichtung von seiner Wirkposition in seine Parkposition zu verbringen, werden nachfolgende Schritte durchgeführt: In einem ersten Schritt wird die Wirkung des Einrast- und Zentrierelements aufgehoben. In einem zweiten Schritt wird der Rahmen nach oben geschwenkt, wobei diese Schwenkbewegung durch die mindestens eine Gasdruckfeder hervorgerufen wird. In einem dritten Schritt wird die Schwenkbewegung durch die Anschlageinrichtung beendigt. In einem letzten Schritt wird der Rahmen in seiner schrägen Lage durch die mindestens eine Gasdruckfeder gehalten.

Um den Rahmen einer Aufnahmevorrichtung von seiner Parkposition in seine Wirkposition zu verbringen werden nachfolgende Schritte durchgeführt: In einem ersten Schritt wird der Rahmen von seiner schrägen Lage bis kurz vor seine horizontale Lage verschwenkt. In einem zweiten Schritt wird der Rahmen weitergeschwenkt, wobei diese Bewegung durch das mindestens eine Führungselement unterstützt ist, bis das Einrast- und Zentrierelement den Rahmen in seiner horizontalen Lage fixiert.

Hinsichtlich weiterer Vorteile und vorteilhafter Ausgestaltungen der Erfindung wird auf die Unteransprüche sowie die Beschreibung eines Ausführungsbeispiels unter Bezugnahme auf die beiliegenden Zeichnungen verwiesen.

### Ausfuhrungsbeispiel

Die Erfindung soll an Hand eines Ausführungsbeispiels noch näher erläutert werden. Es zeigen in schematischer Darstellung
- Fig. 1a: eine erfindungsgemäße Aufnahmevorrichtung in ihrer Parkposition und einer angedeuteten Aufnahmevorrichtung in ihrer Wirkposition
- Fig. 1b: die Aufnahmevorrichtung innerhalb einer angedeuteten Faltschachtelklebemaschine in ihrer Wirkposition
- Fig. 2a: die Aufnahmevorrichtung ohne angrenzende Elemente
- Fig. 2b: eine Ansicht der Aufnahmevorrichtung zur Veranschaulichung der Schwenkbewegung

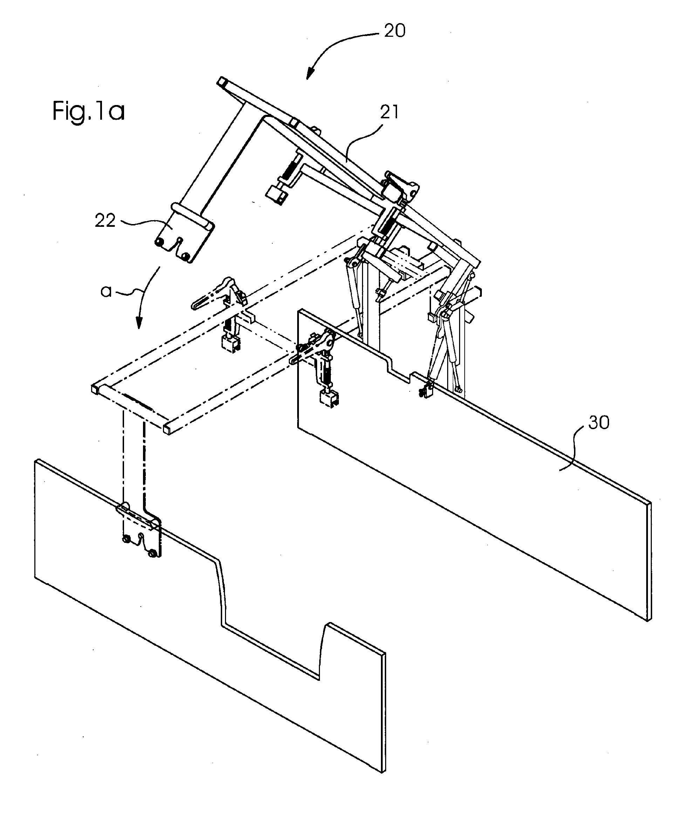

Fig. 1a zeigt eine erfindungsgemäße Aufnahmevorrichtung 20 einer Faltschachtelklebemaschine zum Aufnehmen von Führungselementen und / oder Werkzeugen. Der Rahmen 21 der Aufnahmevorrichtung 20 befindet sich in seiner Parkposition, in einer aus der Horizontalen herausgeschwenkten Schräglage. Von dieser Schräglage aus kann der Rahmen 21 in Schwenkrichtung a heruntergeschwenkt und in seine horizontale Wirkposition verbracht werden. Die Wirkposition des Rahmens 21 ist in Fig. 1a angedeutet. Die Arretiereinrichtung 22, welche am einen Ende des Rahmens 21 befestigt ist, kommt dabei in Eingriff mit am Maschinengestell 30 der Faltschachtelklebemaschine befestigten Gegenelementen.

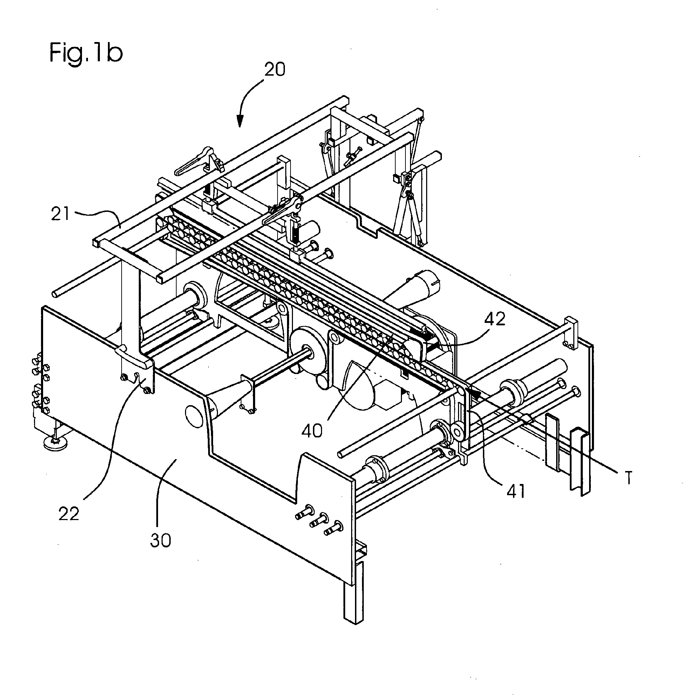

Eine Darstellung des Rahmens 21 in seiner Wirkposition befindet sich in Fig. 1b. Dabei sind auch die angrenzenden Elemente der Faltschachtelklebemaschine als auch das Maschinengestell 30 der Faltschachtelklebemaschine dargestellt. Ein Faltschachtelzuschnitt (nicht dargestellt) wird in Faltschachteltransportrichtung T durch die Faltschachtelklebemaschine transportiert. Zur Unterstützung des Transports des Faltschachtelzuschnitts besitzt das in Fig. 1b dargestellte Modul der Faltschachtelklebemaschine einen Mitteltransport. Dieser wird gebildet durch ein unteres Transportband 41 und ein oberes Transportband 42. Das untere Transportband 41 ist Teile einer Vorrichtung, welche in das Modul der Faltschachtelklebemaschine eingehängt werden kann. Das obere Transportband 42 ist Teil eines Führungselements 40, einer sogenannten Rollschiene. Diese Rollschiene 40 ist am Rahmen 21 der Aufnahmevorrichtung 20 befestigt und kann durch die Schwenkbewegung des Rahmens 21 von ihrer dargestellten Wirkposition in eine Parkposition verbracht werden.

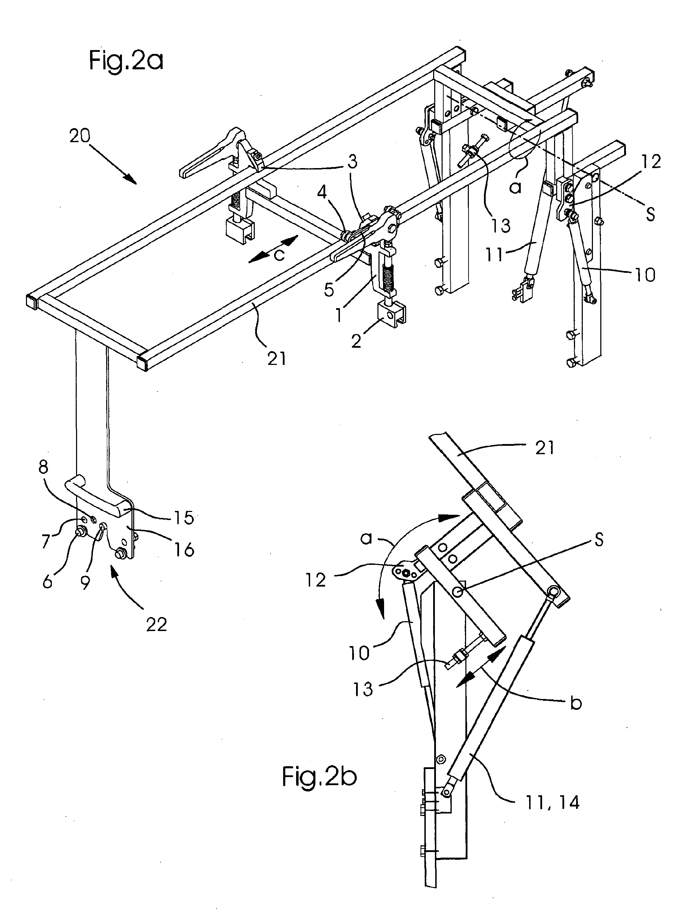

Die Befestigung der Rollschiene 40 am Rahmen 21 ist in Fig. 2a im Detail dargestellt. Anstelle der Rollschiene 40 können auch Werkzeuge, wie beispielsweise Falteinrichtungen oder andere Zusatzeinrichtungen angebracht werden. Werden diese nicht benötigt, so können sie durch eine Schwenkbewegung a des Rahmens 21 aus dem Maschinenmodul heraus in eine Parkposition verschwenkt werden. Eine Rollschiene 40 oder ein Werkzeug wird durch die Aufnahmen 2 der Abhebevorrichtung 1 geklemmt. Um die Rollschiene 40 oder ein Werkzeug quer zur Bogentransportrichtung T in Richtung c entlang des Rahmens 21 zu verschieben und die Rollschiene 40 oder das Werkzeug richtig zu positionieren, werden die Pratzen 3 gelöst. Die Kugellager 4 legen sich dabei auf die Vierkantstangen des Schwenkrahmens 21 ab und stellen eine leichte Verschieblichkeit sicher. Winkelbleche 5 stellen sicher, dass bei der Querverstellung c der Rollschiene 40 oder des Werkzeugs die Rollschiene 40 oder das Werkzeug parallel zur Transportrichtung T und damit parallel zum unteren Transportband 41 (nicht dargestellt) ausgerichtet bleibt.

Um den Rahmen 21 zusammen mit dem Führungselement oder Werkzeug aus dem Modul der Faltschachtelklebemaschine herauszuschwenken, werden zuerst die beiden Sicherungsschrauben 6 gelöst, welche in das Maschinengestell 30 der Faltschachtelklebemaschine (nicht dargestellt) eingeschraubt sind. Durch Ziehen am Griff 15 wird nachfolgend die Frontplatte 16 über die Zentrierschraube 7 geführt und die Arretiereinrichtung 22 damit außer Funktion gebracht. Die Schwenkbewegung a wird durch die beiden Gasdruckfedern 10 unterstützt. Ein mittig eingebauter Ölbremszylinder 11, welcher alternativ durch einen steuerbaren Pneumatikzylinder 14 ersetzt werden kann, arbeitet gegen die Kraft der Gasdruckfedern 10, um so ein Hochschnellen des Schwenkrahmens 21 zu vermeiden. Die Gasdruckfedern 10 sind an ihrem einen Ende an einer mit dem Rahmen 21 verbundenen Platte 12 und an ihrem anderen Ende mit dem Maschinengestell 30 verbunden. Zur Anpassung der wirksamen Kraft der Gasdruckfeder 10 an die Erfordernisse, welche abhängig sind vom Einsatzort der Aufnahmevorrichtung 20 und den am Rahmen 21 befestigten Führungselementen 40 bzw. Werkzeugen, ist die Platte 12 mit verschiedenen Bohrungen versehen, über welche die Gasdruckfeder 10 mit der Platte 12 verbunden werden kann. Die Gasdruckfedern 10 sind dabei so einzustellen, dass diese die Schwenkbewegung a des Rahmens 21 um die Schwenkachse S bewirken und den Schwenkrahmen 21 in seiner ausgeschwenkten schrägen Lage, seiner Parkposition, halten. Wenn sich der Rahmen 21 in seiner Parkposition befindet, liegt der Rahmen 21 am Kopf der Stellschraube 13 der Anschlageinrichtung an. Durch Drehen der Stellschraube 13 kann der Maschinenbediener den Winkel der Parkposition variieren und damit die Höhe des Griffs 15 festlegen, so dass dieser vom Maschinenbediener auch in der Parkposition problemlos und ergonomisch erreicht werden kann.

Um den Schwenkrahmen 21 in seine Wirkposition zu verbringen, kann der Maschinenbediener den Schwenkrahmen 21 am Griff 15 nach unten ziehen. Die Arretierung des Rahmens 21 wird dabei durch die Arretiereinrichtung 22 sichergestellt. Die am Maschinengestell 30 befestigte Schraube 9 dient der Zentrierung der Frontplatte 16, die Linsenschraube 8 lenkt die Frontplatte 16 ab und hält sie auf Abstand, bis die beiden Zentrierschrauben 7 gleichzeitig mit der Linsenschraube 8 einrasten. Damit ist der Rahmen 21 über die Arretiereinrichtung 22 in seiner Wirkposition fixiert. Zusätzlich werden die Sicherungsschrauben 6 angezogen. Anstelle der Sicherungsschrauben 6 können sich auch Klemmhebel, Sterngriffe oder Kreuzgriffe befinden.

In Fig. 2b ist ein Ausschnitt aus einer Ansicht der Aufnahmevorrichtung 20 zur Veranschaulichung der Wirkelemente der Schwenkbewegung a dargestellt. Der Ölbremszylinder 11 kann alternativ auch als steuerbarer Pneumatikzylinder 14 ausgeführt sein. Dies hat den Vorteil, dass dieser das Absenken des Schwenkrahmens 21 zusätzlich unterstützen kann. So kann an der bedienerseitigen Wand des Maschinengestells 30 ein Pneumatiktaster angebracht werden, durch welchen das durch den steuerbaren Pneumatikzylinder 14 unterstützte Absenken des Schwenkrahmens 21 ausgelöst werden kann.

### Bezugszeichenliste

- 1: Abhebevorrichtung
- 2: Aufnahme für Führungselemente und / oder Werkzeuge
- 3: Klemmpratzen
- 4: Kugellager
- 5: Winkelblech
- 6: Sicherungsschraube
- 7: Zentrierschraube
- 8: Linsenschraube
- 9: Schraube
- 10: Gasdruckfeder
- 11: Ölbremszylinder
- 12: Platte
- 13: Stellschraube der Anschlageinrichtung
- 14: Pneumatikzylinder
- 15: Griff
- 16: Frontplatte

- 20: Aufnahmevorrichtung
- 21: Rahmen
- 22: Arretiereinrichtung

- 30: Maschinengestell der Faltschachtelklebemaschine

- 40: Führungselement (Rollschiene)
- 41: unteres Transportband
- 42: oberes Transportband

- T: Faltschachteltransportrichtung
- S: Schwenkachse
- a: Schwenkbewegung
- b: Verstellung der Stellschraube der Anschlageinrichtung
- c: Querverstellung

## Patentansprüche

1. Aufnahmevorrichtung (20) einer Faltschachtelklebemaschine zum Aufnehmen von Führungselementen (40), insbesondere einer Rollschiene, und / oder von Werkzeugen, wie beispielweise Falteinrichtungen, wobei die Führungselemente (40) und / oder Werkzeuge von einer Wirkposition oberhalb der Faltschachteltransportebene in eine Parkposition verbracht werden können, wobei die Aufnahmevorrichtung (20) über einen Rahmen (21) verfügt, an welchem die Führungselemente (40) und / oder Werkzeuge befestigt sind, und der Rahmen (21) um eine Schwenkachse (S) schwenkbar ist, wobei die Schwenkachse (S) parallel zur Faltschachteltransportrichtung (T) ausgerichtet ist
**dadurch gekennzeichnet,**
**dass** die Aufnahmevorrichtung (20) eine Anschlageinrichtung (13) aufweist, welche die Lage des Rahmens (21) in seiner Parkposition festlegt, wobei der Rahmen (21) von einer horizontalen Lage, in welcher sich die Führungselemente (40) und / oder Werkzeuge in ihrer Wirkposition befinden, durch eine Schwenkbewegung (a) um die Schwenkachse (S) von weniger als 90 ° in eine Schräglage, in welcher sich die Führungselemente (40) und / oder Werkzeuge in ihrer Parkposition befinden, verbringbar ist.

2. Aufnahmevorrichtung nach Anspruch 1,
**dadurch gekennzeichnet,**
**dass** die Führungselemente (40) und / oder Werkzeuge verschieblich (c) an dem Rahmen (21) befestigt sind.

3. Aufnahmevorrichtung nach einem der Ansprüche 1 bis 2,
**dadurch gekennzeichnet,**
**dass** die Anschlageinrichtung (13) ein verstellbares Anschlagelement (13)aufweist.

4. Aufnahmevorrichtung nach einem der Ansprüche 1 bis 3,
**dadurch gekennzeichnet,**
**dass** die Aufnahmevorrichtung (20) mindestens eine Gasdruckfeder (10) aufweist und welche den Rahmen (21) von seiner horizontalen Lage in seine Schräglage bewegt und den Rahmen (21) in dieser Position hält.

5. Aufnahmevorrichtung nach einem der Ansprüche 1 bis 4,
**dadurch gekennzeichnet,**
**dass** an der der Schwenkachse (S) gegenüber liegenden Seite des Rahmens (21) eine Arretiereinrichtung (22) zum temporären Befestigen des Rahmens (21) am Maschinengestell (30) der Faltschachtelklebemaschine angebracht ist.

6. Aufnahmevorrichtung nach Anspruch 5,
**dadurch gekennzeichnet,**
**dass** die Arretiereinrichtung (22) mindestens ein Führungselement (9), mindestens ein Einrast- und Zentrierelement (7, 8) und mindestens ein Arretierelement (6) umfasst.

7. Aufnahmevorrichtung nach Anspruch 6,
**dadurch gekennzeichnet,**
**dass** es sich bei dem Führungselement um eine Ausnehmung oder Nut handelt, welche in ein am Maschinengestell angebrachtes Gegenelement (9) eingreift, dass es sich bei dem Einrast- und Zentrierelement um eine Bohrung handelt, welche den Kopf einer am Maschinengestell angebrachten Schraube (7, 8) aufnimmt, und dass des sich bei dem Arretierelement um eine Sicherungsschraube (6) und / oder einen Sterngriff und / oder einen Kreuzgriff und / oder einen Klemmhebel handelt.

8. Aufnahmevorrichtung nach einem der Ansprüche 4 bis 7,
**dadurch gekennzeichnet,**
**dass** die Aufnahmevorrichtung (20) eine Bremseinrichtung (11, 14) aufweist, welche die durch die mindestens eine Gasdruckfeder (10) hervorgerufene Schwenkbewegung (a) abbremst.

9. Aufnahmevorrichtung nach Anspruch 8,
**dadurch gekennzeichnet,**
**dass** es sich bei der Bremseinrichtung um einen Ölbremszylinder (11) handelt.

10. Aufnahmevorrichtung nach Anspruch 8,
**dadurch gekennzeichnet,**
**dass** es sich bei der Bremseinrichtung um einen steuerbaren Pneumatikzylinder (14) handelt.

11. Faltschachtelklebemaschine mit einer Aufnahmevorrichtung (20) nach einem der Ansprüche 1 bis 11.

12. Verfahren zum Verbringen des Rahmens (21) einer Aufnahmevorrichtung (20) nach Anspruch 6 von seiner Wirkposition in seine Parkposition,
**gekennzeichnet durch** nachfolgende Schritte:
a) Aufheben der Wirkung des Einrast- und Zentrierelements (7, 8) der Arretiereinrichtung (22)
b) Schwenkbewegung (a) des Rahmens (21), hervorgerufen **durch** die mindestens eine Gasdruckfeder (10)
c) Beendigung der Schwenkbewegung (a) **durch** die Anschlageinrichtung (13)
d) Halten des Rahmens (21) in seiner schrägen Lage **durch** die mindestens eine Gasdruckfeder (10)
und zum Verbringen des Rahmens (21) von seiner Parkposition in seine Wirkposition, **gekennzeichnet durch** nachfolgende Schritte:
e) Schwenken des Rahmen (21) von seiner schrägen Lage bis kurz vor seine horizontale Lage
f) Weiterschwenken des Rahmens (21) unterstützt **durch** das mindestens eine Führungselement (9) bis das Einrast- und Zentrierelement (7, 8) den Rahmen (21) in seiner horizontalen Lage fixiert.

13. Verfahren zum Verbringen des Rahmens (21) einer Aufnahmevorrichtung (20) nach Anspruch 6 und 8 von seiner Wirkposition in seine Parkposition,
**gekennzeichnet durch** nachfolgende Schritte:
a) Lösen des mindestens einen Arretierelements (6) der Arretiereinrichtung (22)
b) Aufheben der Wirkung des Einrast- und Zentrierelements (7, 8)
c) Schwenkbewegung (a) des Rahmens (21), hervorgerufen **durch** die mindestens eine Gasdruckfeder (10)
d) Begrenzung der Schwenkgeschwindigkeit **durch** die Bremseinrichtung (11, 14)
e) Beendigung der Schwenkbewegung (a) **durch** die Anschlageinrichtung (13)
f) Halten des Rahmens (21) in seiner schrägen Lage **durch** die mindestens eine Gasdruckfeder (10)

14. Verfahren zum Verbringen des Rahmens (21) einer Aufnahmevorrichtung (20) nach Anspruch 6 und 10 von seiner Parkposition in seine Wirkposition, **gekennzeichnet durch** nachfolgende Schritte:
a) Schwenken des Rahmen (21) von seiner schrägen Lage bis kurz vor seine horizontale Lage unterstützt **durch** den steuerbaren Pneumatikzylinder (14)
b) Weiterschwenken des Rahmens (21) unterstützt **durch** das mindestens eine Führungselement (9) bis das Einrast- und Zentrierelement (7, 8) den Rahmen (21) in seiner horizontalen Lage fixiert
c) Befestigen des Rahmens (21) am Maschinengestell (30) der Faltschachtelklebemaschine mit dem mindestens einen Arretierelement (6)

## Claims

1. A receiving apparatus (20) of a folding box gluing machine for receiving guide elements (40), in particular a roller rail, and/or tools such as folding devices, wherein the guide elements (40) and/or tools are movable to be disposed from an active position thereof above the folding box transport plane to a parked position, wherein the receiving apparatus (20) comprises a frame (21) to which the guide elements (40) and/or the tools are fastened, and said frame (21) being pivotally mounted about a pivot axis (S), said pivot axis (S) extending parallel to the folding box transport direction (T),
**characterized in that**
said receiving apparatus (20) comprises a stop device (13) configured to define the position of said frame (21) in it's parking position, wherein said frame (21) is movable from a horizontal position, in which the guide elements (40) and/or tools are situated in their active position, by a pivoting movement (a) about said pivot axis (S) of less than 90° to an oblique position, in which the guide elements (40) and/or tools are situated in their parked position.

2. The receiving apparatus according to claim 1,
**characterized in that**
said guide elements (40) and/or tools are displaceably (c) fastened to said frame (21).

3. The receiving apparatus according to one of claims 1 to 2,
**characterized in that**
said stop device includes (13) an adjustable stop element (13).

4. The receiving apparatus according to any one of claims 1 to 3,
**characterized in that**
said receiving apparatus (20) comprises at least one gas pressure spring (10) configured to move said frame (21) from the horizontal position into the oblique position and to hold said frame (21) in this position.

5. The receiving apparatus according to any one of claims 1 to 4,
**characterized in that**
a locking device (22) for temporarily fastening said frame (21) to the machine frame (30) of the folding box gluing machine is disposed on a side of said frame (21) opposite said pivot axis (S).

6. The receiving apparatus according to claim 5,
**characterized in that**
said locking device (22) comprises at least one guide element (9), at least one latching and centering element (7, 8), and at least one locking element (6).

7. The receiving apparatus according to claim 6,
**characterized in that**
said guide element is a recess or groove engaging into a corresponding element (9) that is attached to the machine frame, said latching and centering element is a bore that receives the head of a screw (7, 8) attached to the machine frame, and said locking element is a securing screw (6) and/or a star handle and/or a cruciform handle and/or a clamping lever.

8. The receiving apparatus according to any one of claims 4 to 7,
**characterized in that**
said receiving apparatus (20) comprises a braking device (11, 14) configured to brake the pivoting movement (a) caused by said at least one gas pressure spring (10).

9. The receiving apparatus according to claim 8,
**characterized in that**
said braking device is an oil break cylinder (11).

10. The receiving apparatus according to claim 8,
**characterized in that**
said braking device is a controllable pneumatic cylinder (14).

11. A folding box gluing machine, comprising a receiving apparatus (20) according to any one of claims 1 to 10.

12. A method for moving a frame (21) of a receiving apparatus (20) according to claim 6 from the active position into the parked position,
**characterized by** the following steps:
a) canceling the action of the latching and centering element (7, 8) of the locking device (22);
b) pivoting movement (a) of the frame (21) caused by said at least one gas pressure spring (10);
c) terminating the pivoting movement (a) with a stop device (13);
d) holding the frame (21) in the oblique position with the at least one gas pressure spring (10);
and for moving the frame (21) from the parked position into the active position, **characterized by** the following steps:
e) pivoting the frame (21) from the oblique position as far as just before the horizontal position;
f) further pivoting the frame (21) assisted by the at least one guide element (9) until the latching and centering element (7, 8) fixes the frame (21) in the horizontal position.

13. A method for moving the frame (21) of a receiving apparatus (20) according to claim 6 and 8 from the active position into the parked position,
**characterized by** the following steps:
a) releasing the at least one locking element (6) of the locking device (22);
b) unlatching the latching and centering element (7, 8);
c) pivoting movement (a) of the frame (21) caused by the at least one gas pressure spring (10);
d) limiting the pivoting speed with the braking device (11, 14);
e) terminating the pivoting movement (a) with the stop device (13); and
f) holding the frame (21) in the oblique position with the at least one gas pressure spring (10).

14. A method for moving a frame (21) of a receiving apparatus (20) according to claim 6 and 10 from the parked position into the active position,
**characterized by** the following steps:
a) pivoting of the frame (21) from the oblique position as far as just before it's horizontal position assisted by the controllable pneumatic cylinder (14);
b) further pivoting the frame (21) assisted by the at least one guide element (9) until the latching and centering element (7, 8) fixes the frame (21) in it's horizontal position; and
c) fastening the frame (21) to the machine frame (30) of the folding box gluing machine with the at least one locking element (6).

## Revendications

1. Dispositif de support de réception (20) d'une machine de collage de boites pliantes, destiné à recevoir ou accueillir des éléments de guidage (40), notamment une glissière de roulement, et/ou des outillages, comme par exemple des dispositifs de pliage, les éléments de guidage (40) et/ou les outillages pouvant être amenés d'une position active au-dessus du plan de transport des boites pliantes dans une position d'arrêt ou de stationnement, le dispositif de support de réception (20) disposant d'un cadre (21) sur lequel sont fixés les éléments de guidage (40) et/ou les outillages, et le cadre (21) pouvant basculer ou pivoter autour d'un axe de pivotement (S), cet axe de pivotement (S) étant d'une orientation parallèle à la direction de transport (T) des boites pliantes,
**caractérisé**
**en ce que** le dispositif de support de réception (20) comporte un dispositif de butée (13), qui détermine le positionnement du cadre (21) dans sa position de stationnement, le cadre (21) pouvant être amené d'une position horizontale, dans laquelle les éléments de guidage (40) et/ou les outillages se trouvent dans leur position active, à une position inclinée, dans laquelle les éléments de guidage (40) et/ou les outillages se trouvent dans leur position de stationnement, par un mouvement de pivotement (a) de moins de 90° autour de l'axe de pivotement (S).

2. Dispositif de support de réception selon la revendication 1,
**caractérisé**
**en ce que** les éléments de guidage (40) et/ou les outillages sont fixés de manière coulissante (c) sur le cadre (21).

3. Dispositif de support de réception selon l'une des revendications 1 à 2,
**caractérisé**
**en ce que** le dispositif de butée (13) comprend un élément de butée (13) réglable.

4. Dispositif de support de réception selon l'une des revendications 1 à 3,
**caractérisé**
**en ce que** le dispositif de support de réception (20) comporte au moins un ressort de compression à gaz (10), qui déplace le cadre (21) de sa position horizontale à sa position inclinée, et maintient le cadre (21) dans cette position.

5. Dispositif de support de réception selon l'une des revendications 1 à 4,
**caractérisé**
**en ce que** sur le côté du cadre (21), qui est opposé à celui où se trouve l'axe de pivotement (S), est placé un dispositif d'arrêt (22) pour la fixation temporaire du cadre (21) au bâti de machine (30) de la machine de collage de boites pliantes.

6. Dispositif de support de réception selon la revendication 5,
**caractérisé**
**en ce que** le dispositif d'arrêt (22) comprend au moins un élément de guidage (9), au moins un élément de centrage et d'encliquetage (7, 8), et au moins un élément d'arrêt (6).

7. Dispositif de support de réception selon la revendication 6,
**caractérisé**
**en ce que** concernant l'élément de guidage, il s'agit d'une encoche ou d'une rainure, qui vient en prise dans un élément conjugué (9) placé sur le bâti de machine, en ce que concernant l'élément de centrage et d'encliquetage, il s'agit d'un alésage qui reçoit la tête d'une vis (7, 8) placée sur le bâti de machine, et en ce que concernant l'élément d' arrêt, il s' agit d' une vis d'arrêt de sécurité (6) et/ou ou d'une poignée en étoile et/ou d'une poignée en croix et/ou d'un levier de serrage.

8. Dispositif de support de réception selon l'une des revendications 4 à 7,
**caractérisé**
**en ce que** le dispositif de support de réception (20) comprend un dispositif de freinage (11, 14), qui assure le freinage du mouvement de pivotement (a) produit par le ressort de compression à gaz (10).

9. Dispositif de support de réception selon la revendication 8,
**caractérisé**
**en ce que** concernant le dispositif de freinage, il s'agit d'un cylindre ou vérin de freinage à huile (11).

10. Dispositif de support de réception selon la revendication 8,
**caractérisé**
**en ce que** concernant le dispositif de freinage, il s'agit d'un cylindre ou vérin pneumatique (14) pouvant être commandé.

11. Machine de collage de boites pliantes comprenant un dispositif de support de réception (20) selon l'une des revendications 1 à 10.

12. Procédé pour amener le cadre (21) d'un dispositif de support de réception (20) selon la revendication 6, de sa position active à sa position de stationnement, **caractérisé par** les étapes suivantes :
a) suppression de l'action de l'élément de centrage et d'encliquetage (7, 8) du dispositif d'arrêt (22)
b) mouvement de pivotement (a) du cadre (21), produit par ledit au moins un ressort de compression à gaz (10)
c) arrêt du mouvement de pivotement (a) par le dispositif de butée (13)
d) maintien du cadre (21) dans sa position inclinée, par ledit au moins un ressort de compression à gaz (10)
et pour amener le cadre (21) de sa position de stationnement à sa position active,
**caractérisé par** les étapes suivantes :
e) pivotement du cadre (21) de sa position inclinée jusqu'à une position tout juste avant sa position horizontale
f) poursuite du pivotement du cadre (21) assistée par ledit au moins un élément de guidage (9) jusqu'à ce que l'élément de centrage et d'encliquetage (7, 8) fixe le cadre (21) dans sa position horizontale.

13. Procédé pour amener le cadre (21) d'un dispositif de support de réception (20) selon les revendications 6 et 8, de sa position active à sa position de stationnement, **caractérisé par** les étapes suivantes :
a) déblocage dudit au moins élément d'arrêt (6) du dispositif d'arrêt (22)
b) suppression de l'action de l'élément de centrage et d'encliquetage (7, 8)
c) mouvement de pivotement (a) du cadre (21), produit par ledit au moins un ressort de compression à gaz (10)
d) limitation de la vitesse de pivotement par le dispositif de freinage (11, 14)
e) arrêt du mouvement de pivotement (a) par le dispositif de butée (13)
f) maintien du cadre (21) dans sa position inclinée, par ledit au moins un ressort de compression à gaz (10).

14. Procédé pour amener le cadre (21) d'un dispositif de support de réception (20) selon les revendications 6 et 10, de sa position de stationnement à sa position active, **caractérisé par** les étapes suivantes :
a) pivotement du cadre (21) de sa position inclinée jusqu'à une position tout juste avant sa position horizontale, avec assistance par le cylindre ou vérin pneumatique (14) pouvant être commandé
b) poursuite du pivotement du cadre (21) assistée par ledit au moins un élément de guidage (9) jusqu'à ce que l'élément de centrage et d'encliquetage (7, 8) fixe le cadre (21) dans sa position horizontale
c) fixation du cadre (21) au bâti de machine (30) de la machine de collage de boites pliantes, au moyen dudit au moins un élément d'arrêt (6).
